# EUROPÄISCHE PATENTSCHRIFT

(11) **EP 3 653 052 B1**
(45) Veröffentlichungstag und Bekanntmachung des Hinweises auf die Patenterteilung: **25.08.2021**
(21) Anmeldenummer: 19401044.3
(22) Anmeldetag: 04.11.2019
(51) Int. Cl.: A01M 7/00

(54) **VERFAHREN ZUM ERFASSEN DES ABSTANDS EINES GESTÄNGES ZU EINER LANDWIRTSCHAFTLICHEN NUTZFLÄCHE UND DEREN PFLANZENBESTAND**
METHOD FOR DETECTING THE DISTANCE BETWEEN A ROD AND AN AGRICULTURAL AREA AND PLANTS ON SAME
PROCÉDÉ DE DÉTECTION DE LA DISTANCE D'UNE TIGE PAR RAPPORT À UNE SURFACE AGRICOLE ET À SA VÉGÉTATION

(30) Priorität: 13.11.2018 DE 102018128378
(43) Veröffentlichungstag der Anmeldung: 20.05.2020
(73) Patentinhaber: Amazonen-Werke H. Dreyer SE & Co. KG, 49205 Hasbergen (DE)
(72) Erfinder: Trentmann, Markus, 49134 Wallenhorst (DE)

(56) Entgegenhaltungen:
- WO-A1-2016/128577
- DE-A1-102017 102 976
- DE-B3-102017 004 808

## Beschreibung

Die Erfindung betrifft ein Verfahren zum Erfassen des Abstands eines Gestänges eines landwirtschaftlichen Spritzgeräts, insbesondere einer Feldspritze, zu einer landwirtschaftlichen Nutzfläche und/oder deren Pflanzenbestand nach dem Oberbegriff des Patentanspruchs 1 sowie ein Verfahren zum Führen eines Gestänges eines landwirtschaftlichen Spritzgeräts, insbesondere einer Feldspritze, nach dem Oberbegriff des Patentanspruchs 10.

Moderne landwirtschaftliche Spritzgeräte verfügen über Sensoreinheiten, welche an einem Gestänge des landwirtschaftlichen Spritzgeräts angeordnet sind und den Abstand zu einer landwirtschaftlichen Nutzfläche und/oder deren Pflanzenbestand erfassen. Der erfasste Abstand des Gestänges des landwirtschaftlichen Spritzgeräts zu der landwirtschaftlichen Nutzfläche und/oder deren Pflanzenbestand wird dann zur Führung, insbesondere zur Höhenführung, des Gestänges genutzt.

Beispielsweise beschreibt die Druckschrift EP 2 630 856 B1 eine Höhensteuerung eines Spritzgestänges, bei welcher mittels Ultraschallsensoren der Abstand zum Boden oder zur Bestandsoberkante ermittelt wird, sodass die Gestängehöhe derart geregelt wird, dass das Gestänge und der Boden bzw. der Bestand nicht in Berührung kommen.

Ferner ist aus der Druckschrift DE 10 2015 119 078 A1 eine sensorgestützte Höhenführung eines Spritzgestänges bekannt, bei welcher die eingesetzten Sensoren zur korrekten Messwertermittlung in Bezug auf ihre Position am Gestänge kalibriert werden. Außerdem ist aus der Druckschrift DE 10 2015 119 073 A1 eine kamerabasierte Messwerterfassung bekannt, bei welcher der Bestand über die Arbeitsbreite der Maschine vorausschauend erfasst wird.

Aus der Druckschrift DE 10 2011 054 742 B4 ist ein System bekannt, bei welchem die Daten der eingesetzten Ultraschallsensoren sowohl zur Höhenführung eines Verteilergestänges als auch zur Ermittlung der überfahrenden Biomasse verwendet werden. Darüber hinaus schlägt die Druckschrift DE 103 29 472 A1 ein System zur Erfassung einer landwirtschaftlichen Maschine zu einem Boden bzw. einem auf dem Boden befindlichen Pflanzenbestand vor. Das vorgeschlagene System erlaubt das Ermitteln der Bestandsdichte aus den erzeugten Messsignalen.

Weitere Höhenführungen werden in der DE 10 2017 004 808 B3, der DE 10 2017 102 976 A1 sowie der WO 2016 128 577 A1 beschrieben.

Es hat sich jedoch gezeigt, dass bekannte Signalfiltervorgänge, beispielsweise mittels eines Tiefpassfilters, keine präzise und verlässliche Abstandserfassung auf landwirtschaftlichen Nutzflächen erlauben. Insbesondere die durch den Pflanzenbestand bedingten Unregelmäßigkeiten bei der Abstandserfassung führen bei den bekannten Lösungen regelmäßig zu Fehlinterpretationen von Messwerten, sodass häufig keine zufriedenstellende Höhenführung des Gestänges des landwirtschaftlichen Spritzgeräts im praktischen Einsatz umgesetzt werden kann.

Die der Erfindung zugrundeliegende Aufgabe besteht somit darin, die Erfassung des Abstands eines Gestänges eines landwirtschaftlichen Spritzgeräts zu einer landwirtschaftlichen Nutzfläche und/oder deren Pflanzenbestand zu verbessern.

Die Aufgabe wird gelöst durch ein Verfahren nach Anspruch 1.

Die Erfindung macht sich die Erkenntnis zunutze, dass die Verwertbarkeit von Messwerten zum Erfassen des Abstands eines Gestänges eines landwirtschaftlichen Spritzgeräts zu einer landwirtschaftlichen Nutzfläche und/oder deren Pflanzenbestand wesentlich besser in Abhängigkeit anderer Messwerte beurteilt werden kann, als in Abhängigkeit von vordefinierten Grenzwerten für die Messwerte. Ein Tiefpassfilter bewertet beispielsweise die Verwertbarkeit eines Messwerts durch einen Vergleich des Messwerts mit einem vordefinierten Grenzwert, wobei der vordefinierte Grenzwert nicht von den anderen Messwerten der Sensoreinheiten des landwirtschaftlichen Spritzgeräts abhängig ist. Diese Art der Messwert- bzw. Signalfilterung berücksichtigt die durch den Pflanzenbestand hervorgerufenen Messwertabweichungen jedoch nicht in ausreichendem Maße. Eine wesentlich präzisere Abstandserfassung kann vielmehr dadurch erreicht werden, dass einzelne Messwerte in Abhängigkeit von anderen Messwerten bewertet werden. Auf Basis der durchgeführten Bewertung kann dann entschieden werden, ob bzw. in welchem Maße der jeweilige Messwert in Steuerungs- und/oder Regelungsroutinen des landwirtschaftlichen Spritzgeräts berücksichtigt wird.

Erfindungsgemäß umfasst das Verfahren das Bewerten von mehreren oder sämtlichen Messwerten mehrerer oder sämtlicher Sensoreinheiten des landwirtschaftlichen Spritzgeräts in Abhängigkeit mehrerer oder sämtlicher Messwerte von mehreren oder sämtlichen Sensoreinheiten des landwirtschaftlichen Spritzgeräts. Durch das Bewerten zumindest eines Messwerts zumindest einer Sensoreinheit erfolgt vorzugsweise ein Qualifizieren des zumindest einen bewerteten Messwerts hinsichtlich der Verwertbarkeit des zumindest einen Messwerts in Steuerungs- und/oder Regelungsroutinen des landwirtschaftlichen Spritzgeräts. Dem Bewerten kann beispielsweise ein Filteralgorithmus zugrunde liegen. Das Verfahren kann ferner das Erfassen von Gestängebewegungen umfassen, wobei die Gestängebewegungen auf Grundlage der Abstandserfassung des Gestänges zu der landwirtschaftlichen Nutzfläche und/oder deren Pflanzenbestand ermittelt werden.

In einer bevorzugten Ausführungsform des erfindungsgemäßen Verfahrens erfolgt das Bewerten zumindest eines Messwerts zumindest einer Sensoreinheit in Abhängigkeit zumindest eines Messwerts der gleichen und/oder zumindest einer anderen Sensoreinheit hinsichtlich der Signalplausibilität. Bei der Erfassung des Abstands eines Gestänges eines landwirtschaftlichen Spritzgeräts zu einer landwirtschaftlichen Nutzfläche und/oder deren Pflanzenbestand ist zu berücksichtigen, dass auch vergleichsweise große Messwertschwankungen möglich sind, insbesondere in Bereichen mit einem lichten Bestand, in Bereichen von Fahrspuren bzw. Fahrgassen und/oder aufgrund von lokaler Fehldüngung oder Fehlausbringung von Saatgut. Das Bewerten des zumindest einen Messwerts zumindest einer Sensoreinheit in Abhängigkeit zumindest eines Messwerts der gleichen und/oder zumindest einer anderen Sensoreinheit kann alternativ oder zusätzlich hinsichtlich der Signalverwertbarkeit zum Erfassen des

Abstands des Gestänges des landwirtschaftlichen Spritzgeräts zu der landwirtschaftlichen Nutzfläche und/oder deren Pflanzenbestand erfolgen. Beispielsweise können Messwerte, welche eindeutig den Abstand des Gestänges des landwirtschaftlichen Spritzgeräts zu dem Boden der landwirtschaftlichen Nutzfläche repräsentieren, als weniger verwertbar oder nicht verwertbar bewertet werden, wenn der Abstand des Gestänges zu der Oberkante des Pflanzenbestandes ermittelt werden soll. Andererseits können auch Messwerte, welche eindeutig den Abstand des Gestänges zu der Oberkante des Pflanzenbestandes betreffen, als weniger verwertbar oder nicht verwertbar bewertet werden, wenn der Abstand des Gestänges zu dem Boden der landwirtschaftlichen Nutzfläche ermittelt werden soll. Wenn eine Sensoreinheit dauerhaft nicht-plausible Messwerte liefert, beispielsweise aufgrund eines Defekts der Sensoreinheit, können die Messwerte dauerhaft verworfen werden oder dauerhaft durch Ersatzwerte ersetzt werden.

In einer Weiterbildung des erfindungsgemäßen Verfahrens erfolgt das Bewerten zumindest eines Messwerts zumindest einer Sensoreinheit in Abhängigkeit zumindest eines zeitgleich mit dem zu bewertenden Messwert erfassten Messwerts zumindest einer anderen Sensoreinheit. Insbesondere erfolgt das Bewerten zumindest eines Messwerts zumindest einer Sensoreinheit in Abhängigkeit mehrerer zeitgleich mit dem zu bewertenden Messwert erfasster Messwerte unterschiedlicher Sensoreinheiten, beispielsweise in Abhängigkeit der zeitgleich mit dem zu bewertenden Messwert erfassten Messwerte der Sensoreinheiten einer Gestängeseite des Gestänges, eines Gestängesegments des Gestänges und/oder des gesamten Gestänges. Somit kann die Messwertbewertung in Echtzeit erfolgen und auf den Umgebungsinformationen von mehreren Sensoreinheiten, welche quer zur Fahrtrichtung an dem Gestänge angeordnet sind, basieren. Durch die Berücksichtigung von zeitgleich erfassten Messwerten anderer Sensoreinheiten können somit beispielsweise lokale und sich in Querrichtung erstreckende Bestandslücken oder lokale und sich in Querrichtung erstreckende Hochwuchsbereiche vergleichsweise sicher identifiziert werden, sodass entsprechende Messwertschwankungen zuverlässig interpretiert werden können.

Außerdem ist ein erfindungsgemäßes Verfahren bevorzugt, bei welchem das Bewerten zumindest eines Messwerts zumindest einer Sensoreinheit in Abhängigkeit zumindest eines zeitlich vor dem zu bewertenden Messwert erfassten Messwerts der gleichen Sensoreinheit erfolgt. Insbesondere erfolgt das Bewerten zumindest eines Messwerts zumindest einer Sensoreinheit in Abhängigkeit mehrerer zeitlich vor dem zu bewertenden Messwert erfasster Messwerte der gleichen Sensoreinheit, beispielsweise in Abhängigkeit mehrerer oder sämtlicher innerhalb eines Bewertungszeitraums zeitlich vor dem Erfassungszeitpunkt des zu bewertenden Messwert erfasster Messwerte der gleichen Sensoreinheit. Somit kann die Messwertbewertung unabhängig von Messwerten anderer Sensoreinheiten erfolgen und auf den Umgebungsinformationen lediglich einer Sensoreinheit basieren. Durch die Berücksichtigung von zeitlich zuvor erfassten Messwerten der gleichen Sensoreinheit können somit beispielsweise lokale und sich in Längsrichtung erstreckende Bestandslücken oder lokale und sich in Längsrichtung erstreckende Hochwuchsbereiche vergleichsweise sicher identifiziert werden, sodass entsprechende Messwertschwankungen zuverlässig interpretiert werden können.

In einer anderen Ausführungsform des erfindungsgemäßen Verfahrens umfasst das Bewerten zumindest eines Messwerts zumindest einer Sensoreinheit in Abhängigkeit zumindest eines Messwerts der gleichen und/oder zumindest einer anderen Sensoreinheit das Vergleichen des zumindest einen zu bewertenden Messwerts der zumindest einen Sensoreinheit mit einem Referenzwert, welcher von dem zumindest einen Messwert der gleichen und/oder der zumindest einen anderen Sensoreinheit abhängig ist, und/oder das Erfassen der Signalabweichung zwischen dem zumindest einen zu bewertenden Messwert der zumindest einen Sensoreinheit und dem Referenzwert, welcher von dem zumindest einen Messwert der gleichen und/oder der zumindest einen anderen Sensoreinheit abhängig ist. Der Referenzwert kann beispielsweise von einer Funktion, insbesondere einer linearen Funktion, beispielsweise in Fahrtrichtung und/oder in Gestängerichtung, abhängen. Der Referenzwert kann auch ein Mittelwert der Messwerte des gleichen und/oder mehrerer oder sämtlicher anderer Sensoreinheiten sein. Beispielsweise kann der Referenzwert ein Mittelwert der Messwerte der Sensoreinheiten sein, welche entlang einer Gestängeseite angeordnet sind. Ferner kann der Referenzwert ein Mittelwert der Messwerte der Sensoreinheiten sein, welche entlang eines Gestängesegments angeordnet sind. Der Referenzwert kann durch Interpolation erzeugt werden. Der Referenzwert kann auch ein vordefinierter Wert sein. Alternativ oder zusätzlich umfasst das Bewerten zumindest eines Messwerts zumindest einer Sensoreinheit in Abhängigkeit zumindest eines Messwerts der gleichen und/oder zumindest einer anderen Sensoreinheit das Vergleichen des zumindest einen zu bewertenden Messwerts der zumindest einen Sensoreinheit mit dem zumindest einen Messwert der gleichen und/oder der zumindest einen anderen Sensoreinheit und/oder das Erfassen der Signalabweichung zwischen dem zumindest einen zu bewertenden Messwert der zumindest einen Sensoreinheit und dem zumindest einen Messwert der gleichen und/oder der zumindest einen anderen Sensoreinheit. Hierbei erfolgt ein direkter Messwertvergleich, wodurch beispielsweise lokale Bestandslücken, ein lokaler Minderbewuchs oder ein lokaler Hochwuchs erfasst und bei der Bewertung des Messwerts berücksichtigt werden kann.

Bevorzugt ist ferner ein erfindungsgemäßes Verfahren, bei welchem ein bewerteter Messwert einer Sensoreinheit in Abhängigkeit der Messwertbewertung verworfen wird. Alternativ oder zusätzlich kann ein Messwert einer Sensoreinheit in Abhängigkeit der Messwertbewertung modifiziert werden. Alternativ oder zusätzlich kann ein Messwert einer Sensoreinheit in Abhängigkeit der Messwertbewertung in Relation zu zumindest einem Messwert der gleichen und/oder zumindest einer anderen Sensoreinheit gewichtet werden. Vorzugsweise wird von zeitgleich erzeugten Messwerten unterschiedlicher Sensoreinheiten lediglich ein Messwert oder eine definierte Maximalzahl von Messwerten aufgrund der Messwertbewertung verworfen, damit eine ausreichende Anzahl von Messwerten bei der Steuerung der Gestängeneigung berücksichtigt wird. Das Verwerfen, Modifizieren und/oder Gewichten des bewerteten Messwerts kann beispielsweise erfolgen, wenn die Abweichung zwischen dem zu bewertenden Messwert einer Sensoreinheit und dem Referenzwert oder zumindest einem Messwert der gleichen und/oder zumindest einer anderen Sensoreinheit eine Abweichungsschwelle überschreitet. Mittels des Gewichtens eines Messwerts kann dabei die Relevanz eines Messwerts erhöht oder die Relevanz eines Messwerts verringert werden. Insbesondere, wenn ein Messwert als besonders plausibel und/oder besonders verwertbar bewertet wird, kann mittels einer Gewichtung des Messwerts die Relevanz des Messwerts gesteigert werden. Wenn ein Messwert als weniger oder nicht verwertbar bewertet wird, kann die Relevanz des Messwerts mittels einer Gewichtung verringert werden.

Außerdem ist ein erfindungsgemäßes Verfahren bevorzugt, bei welchem ein bewerteter Messwert einer Sensoreinheit in Abhängigkeit der Messwertbewertung durch einen Ersatzwert ersetzt wird, wobei der Ersatzwert vorzugsweise von zumindest einem Messwert der gleichen und/oder zumindest einer anderen Sensoreinheit abhängig ist und/oder ein zuvor erfasster und zwischengespeicherter Messwert ist. Der Ersatzwert kann beispielsweise ein Mittelwert der Messwerte der gleichen und/oder mehrerer oder sämtlicher anderer Sensoreinheiten sein. Beispielsweise kann der Ersatzwert ein Mittelwert der Messwerte der Sensoreinheiten sein, welche entlang einer Gestängeseite angeordnet sind. Ferner kann der Ersatzwert ein Mittelwert der Messwerte der Sensoreinheiten sein, welche entlang eines Gestängesegments angeordnet sind. Der Ersatzwert kann durch Interpolation erzeugt werden. Der Ersatzwert kann auch ein vordefinierter Wert sein. Das Ersetzen des bewerteten Messwerts kann beispielsweise erfolgen, wenn die Abweichung zwischen dem zu bewertenden Messwert einer Sensoreinheit und dem Referenzwert oder einem Messwert der gleichen und/oder zumindest einer anderen Sensoreinheit eine Abweichungsschwelle überschreitet. Das Verfahren kann ferner das Ermitteln der Abweichung der Messwerte mehrerer oder sämtlicher Sensoreinheiten umfassen, wobei die ermittelte Abweichung beispielsweise eine Standardabweichung sein kann. Weicht der zu bewertende Messwert um ein bestimmtes Maß von der Abweichung, insbesondere der Standardabweichung, ab, wird dieser Messwert durch den Ersatzwert ersetzt.

Darüber hinaus ist ein erfindungsgemäßes Verfahren vorteilhaft, bei welchem die Umgebungsinformationen in den Messwerten der Sensoreinheiten Informationen über den Abstand der jeweiligen Sensoreinheiten zu der landwirtschaftlichen Nutzfläche und/oder deren Pflanzenbestand umfassen. Vorzugsweise betreffen die Messwerte einer Sensoreinheit den Abstand der jeweiligen Sensoreinheit zu der landwirtschaftlichen Nutzfläche und/oder deren Pflanzenbestand. Die Messwerte können beispielsweise konkrete Abstands- und/oder Distanzangaben zu der Strecke zwischen der jeweiligen Sensoreinheit und der landwirtschaftlichen Nutzfläche und/oder deren Pflanzenbestand sein. Somit können Messwerte verworfen, modifiziert, gewichtet oder ersetzt werden, wenn diese nicht-plausible Informationen über den Abstand der jeweiligen Sensoreinheiten zu der landwirtschaftlichen Nutzfläche und/oder deren Pflanzenbestand umfassen. Die Messwerte können auch verworfen, modifiziert, gewichtet oder ersetzt werden, wenn bestandsabhängige Kriterien nicht erfüllt werden. Beispielsweise weist ein Pflanzenbestand einen plausiblen Aufwuchshöhenbereich auf, sodass Messwerte, welche auf eine Aufwuchshöhe des Pflanzenbestandes hinweisen, welcher außerhalb des plausiblen Aufwuchshöhenbereichs liegt, verworfen, modifiziert, gewichtet oder ersetzt werden können.

In einer Weiterbildung des erfindungsgemäßen Verfahrens umfassen die Umgebungsinformationen in den Messwerten der Sensoreinheiten Informationen zu den Reflexionseigenschaften der landwirtschaftlichen Nutzfläche und/oder deren Pflanzenbestand. Auf Grundlage der Informationen zu den Reflexionseigenschaften der landwirtschaftlichen Nutzfläche und/oder deren Pflanzenbestand kann beispielsweise der Chlorophyllzustand in einem Bereich erfasst werden, sodass Lücken im Bestand aufgrund des erfassten Chlorophyllzustands identifiziert werden können. Derartige Lücken im Bestand können einen temporären sprunghaften Anstieg des Abstands zwischen einer Sensoreinheit und der landwirtschaftlichen Nutzfläche und/oder deren Pflanzenbestand begründen. Derartige Bestandslücken können nach ihrer Identifikation bei der Bewertung der Messwerte berücksichtigt werden. Ergänzend kann der Vitalitätszustand des Pflanzenbestandes über die Informationen zu den Reflexionseigenschaften der landwirtschaftlichen Nutzfläche und/oder deren Pflanzenbestand erfasst werden.

In einer Weiterbildung des erfindungsgemäßen Verfahrens wird ein oder werden mehrere Auswertsignale auf Grundlage der mehreren Messwerte der Sensoreinheiten erzeugt, wobei das Erzeugen des einen oder der mehreren Auswertsignale das Verwerfen, Modifizieren, Gewichten und/oder Ersetzen von einem oder mehreren bewerteten Messwerten umfasst. Alternativ oder zusätzlich umfasst das Verfahren das Auswerten des einen oder der mehreren Auswertsignale zum Erzeugen eines Steuersignals für einen oder mehrere Aktoren einer Einrichtung zur Führung des Gestänges des landwirtschaftlichen Spritzgeräts. Vorzugsweise weicht das eine oder weichen die mehreren Auswertsignale zumindest temporär von den durch die Sensoreinheiten erfassten Messwerte ab, da durch das Verwerfen, Modifizieren, Gewichten und/oder Ersetzen von einem oder mehreren bewerteten Messwerten eine Signalkorrektur erfolgt ist. Das eine oder die mehreren Auswertsignale können beispielsweise einem Steuerungssystem des landwirtschaftlichen Spritzgeräts bereitgestellt werden, wobei das Steuerungssystem des landwirtschaftlichen Spritzgeräts eine Steuerung oder Regelung zum Führen des Gestänges des landwirtschaftlichen Spritzgeräts auf Grundlage des einen oder der mehreren Auswertsignale umsetzt.

Die der Erfindung zugrundeliegende Aufgabe wird ferner durch ein Verfahren zum Führen eines Gestänges der eingangs genannten Art gelöst, wobei das Erfassen des Abstands des Gestänges zu der landwirtschaftlichen Nutzfläche und/oder deren Pflanzenbestand mittels des Verfahrens zum Erfassen des Abstands eines Gestänges eines landwirtschaftlichen Spritzgeräts zu einer landwirtschaftlichen Nutzfläche und/oder deren Pflanzenbestand nach einer der vorstehend beschriebenen Ausführungsformen erfolgt. Hinsichtlich der Vorteile und Modifikationen des Verfahrens zum Führen eines Gestänges eines landwirtschaftlichen Spritzgeräts wird auf die Vorteile und Modifikationen des Verfahrens zum Erfassen des Abstands eines Gestänges eines landwirtschaftlichen Spritzgeräts zu einer landwirtschaftlichen Nutzfläche und/oder deren Pflanzenbestand verwiesen.

Es wird ein Steuerungssystem beschreiben, wobei das Steuerungssystem dazu eingerichtet ist, das Verfahren zum Erfassen des Abstands eines Gestänges eines landwirtschaftlichen Spritzgeräts zu einer landwirtschaftlichen Nutzfläche und/oder deren Pflanzenbestand nach einer der vorstehend beschriebenen Ausführungsformen und/oder das Verfahren zum Führen eines Gestänges nach einer der vorstehend beschriebenen Ausführungsformen auszuführen.

Vorzugsweise sind die mehreren Sensoreinheiten beabstandet voneinander an einem Gestänge des landwirtschaftlichen Spritzgeräts angeordnet. Die Sensoreinheiten sind vorzugsweise als optische Sensoren, beispielsweise Infrarot-Sensoren, oder als Ultraschallsensoren oder Radarsensoren ausgebildet.

Es wird ein landwirtschaftliches Spritzgerät beschrieben, wobei das Steuerungssystem des landwirtschaftlichen Spritzgeräts nach einer der vorstehend beschriebenen Ausführungsformen ausgebildet ist. Hinsichtlich der Vorteile und Modifikationen des erfindungsgemäßen landwirtschaftlichen Spritzgeräts wird auf die Vorteile und Modifikationen des erfindungsgemäßen Steuerungssystems verwiesen.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Spritzgeräts in einer Rückansicht;
- Fig. 2: im Rahmen des erfindungsgemäßen Verfahrens zum Erfassen des Abstands eines Gestänges eines landwirtschaftlichen Spritzgeräts zu einer landwirtschaftlichen Nutzfläche und/oder deren Pflanzenbestand erzeugte Messwerte;
- Fig. 3: ein Ablaufdiagramm eines erfindungsgemäßen Verfahrens zum Führen eines Gestänges eines landwirtschaftlichen Spritzgeräts; und
- Fig. 4: ein Ablaufdiagramm eines weiteren erfindungsgemäßen Verfahrens zum Führen eines Gestänges eines landwirtschaftlichen Spritzgeräts.

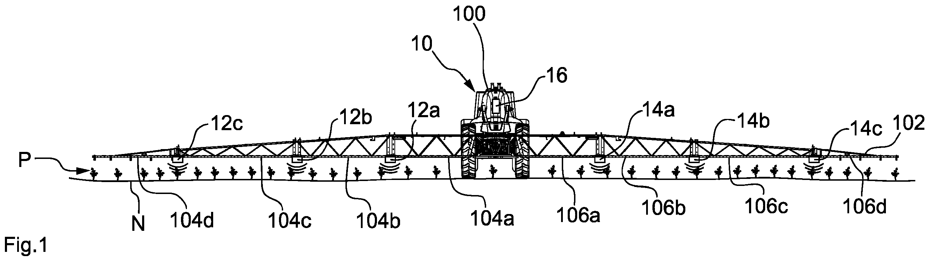

Die Fig. 1 zeigt ein landwirtschaftliches Spritzgerät 100, welches als Feldspritze ausgebildet ist und eine Spritzflüssigkeit, wie etwa Pflanzenschutzmittel, auf eine landwirtschaftliche Nutzfläche N und/oder deren Pflanzenbestand P ausbringt.

Das landwirtschaftliche Spritzgerät 100 weist ein Gestänge 102 auf, an welchem mehrere als Spritzdüsen ausgebildete Ausbringelemente angeordnet sind. Das Gestänge 102 umfasst mehrere zueinander verschwenkbare Gestängesegmente 104a-104d, 106a-106d, wobei die Gestängesegmente 104a-104d einer ersten Gestängeseite zugeordnet werden können und die Gestängesegmente 106a-106d einer zweiten Gestängeseite.

Das landwirtschaftliche Spritzgerät 100 umfasst ferner ein Steuerungssystem 10 mit mehreren Sensoreinheiten 12a-12c, 14a-14c und einer Datenverarbeitungseinrichtung 16.

Die Sensoreinheiten 12a-12c sind voneinander beabstandet angeordnet und auf der ersten Gestängeseite an dem Gestänge 102 des landwirtschaftlichen Spritzgeräts 100 befestigt. Die Sensoreinheiten 14a-14c sind voneinander beabstandet angeordnet und auf der zweiten Gestängeseite an dem Gestänge 102 des landwirtschaftlichen Spritzgeräts 100 befestigt. Die Sensoreinheiten 12a-12c, 14a-14c sind als Ultraschallsensoren ausgebildet und erzeugen Messwerte M, welche Umgebungsinformationen der jeweiligen Sensoreinheiten 12a-12c, 14a-14c umfassen. Die Umgebungsinformationen in den Messwerten M der Sensoreinheiten 12a-12c, 14a-14c umfassen Informationen über den Abstand A der jeweiligen Sensoreinheiten 12a-12c, 14a-14c zu der landwirtschaftlichen Nutzfläche N und/oder deren Pflanzenbestand P.

Die Datenverarbeitungseinrichtung 16 verarbeitet die von den Sensoreinheiten 12a-12c, 14a-14c zur Verfügung gestellten Messwerte M, um den Abstand Ades Gestänges 102 des landwirtschaftlichen Spritzgeräts 100 zu der landwirtschaftlichen Nutzfläche N und/oder deren Pflanzenbestand P zu erfassen und das Gestänge 102 auf Grundlage des erfassten Abstands A des Gestänges 102 des landwirtschaftlichen Spritzgeräts 100 zu der landwirtschaftlichen Nutzfläche N und/oder deren Pflanzenbestand P zu führen. Zum Führen des Gestänges 102 des landwirtschaftlichen Spritzgeräts 100 wird ein oder werden mehrere Aktoren einer Einrichtung zur Führung des Gestänges 102 des landwirtschaftlichen Spritzgeräts 100 in Abhängigkeit des erfassten Abstands A des Gestänges 102 zu der landwirtschaftlichen Nutzfläche N und/oder deren Pflanzenbestand P gesteuert.

Zum Erfassen des Abstands A des Gestänges 102 des landwirtschaftlichen Spritzgeräts 100 zu der landwirtschaftlichen Nutzfläche N und/oder deren Pflanzenbestand P werden die von den Sensoreinheiten 12a-12c, 14a-14c erzeugten Messwerte in Abhängigkeit anderer Messwerte M, welche von den Sensoreinheiten 12a-12c, 14a-14c zeitgleich oder zuvor erzeugt wurden, bewertet, um die Messwerte M hinsichtlich ihrer Signalplausibilität und ihrer Verwertbarkeit zu prüfen. Auf Grundlage der Messwertbewertung können dann ein oder mehrere Auswertsignale S erzeugt werden, wobei das Erzeugen des einen oder der mehreren Auswertsignale S ein Verwerfen, Modifizieren, Gewichten und/oder Ersetzen von einem oder mehreren bewerteten Messwerten M umfassen kann. Anschließend wird das eine oder werden die mehreren Auswertsignale S zum Erzeugen eines Steuersignals für einen Aktor einer Einrichtung zur Führung des Gestänges 102 des landwirtschaftlichen Spritzgeräts 100 ausgewertet, sodass eine entsprechende Gestängeführung umgesetzt werden kann.

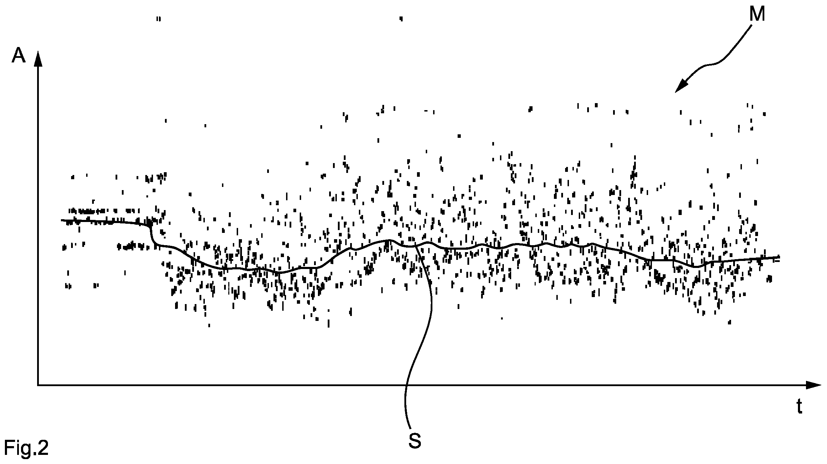

Die Fig. 2 zeigt ein Auswertsignal S, welches den Abstand A eines Punktes eines Gestänges 102 eines landwirtschaftlichen Spritzgeräts 100 zu einer landwirtschaftlichen Nutzfläche N und/oder deren Pflanzenbestand P über die Zeit t repräsentiert. Der Punkt, dessen Abstand zu der landwirtschaftlichen Nutzfläche N und/oder deren Pflanzenbestand P das Auswertsignal S betrifft, kann sich beispielsweise an der Position einer Sensoreinheit 12a-12c, 14a-14c oder an einem laterales Gestängeende befinden.

Das Auswertsignal S wurde auf Grundlage der jeweils punktförmig dargestellten Messwerte M einer Sensoreinheit 12a-12c, 14a-14c erzeugt. Die Messwerte M umfassen Umgebungsinformationen der Sensoreinheit 12a-12c, 14a-14c, wobei die Umgebungsinformationen Informationen über den Abstand A der Sensoreinheit 12a-12c, 14a-14c zu der landwirtschaftlichen Nutzfläche N und/oder deren Pflanzenbestand P umfassen.

Einzelne Messwerte wurden zur Erzeugung des Auswertsignals S in Abhängigkeit von Messwerten des gleichen und anderer Sensoreinheiten 12a-12c, 14a-14c bewertet, um auf Grundlage der Messwertbewertungen einzelne Messwerte zu verwerfen, zu modifizieren, zu gewichten und/oder durch Ersatzwerte zu ersetzen. Dem Bewerten kann dabei ein Filteralgorithmus zugrunde liegen.

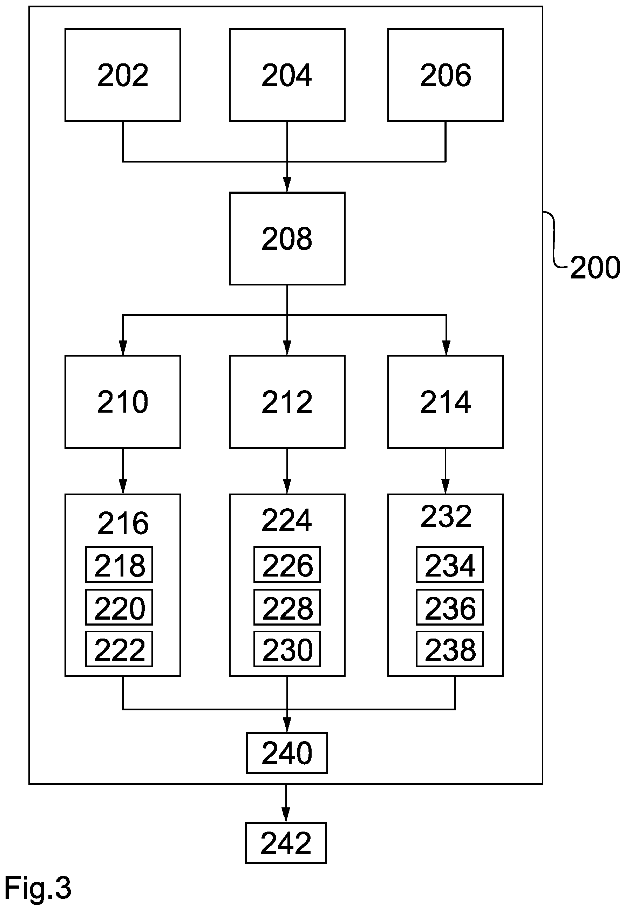

Die Fig. 3 zeigt ein Ablaufdiagramm eines Verfahrens zum Führen eines Gestänges 102 eines landwirtschaftlichen Spritzgeräts 100. Das Verfahren wird durch den nachfolgenden Schritt eingeleitet:
200) Erfassen des Abstands A des Gestänges 102 des landwirtschaftlichen Spritzgeräts 100 zu einer landwirtschaftlichen Nutzfläche N und/oder deren Pflanzenbestand P.

Im Rahmen der Erfassung des Abstands A des Gestänges 102 des landwirtschaftlichen Spritzgeräts 100 zu einer landwirtschaftlichen Nutzfläche N und/oder deren Pflanzenbestand P werden zunächst die folgenden drei Schritte zeitgleich ausgeführt:
202) Erzeugen eines Messwerts M mittels einer ersten Sensoreinheit 12a, wobei der Messwert M Angaben zum Abstand der ersten Sensoreinheit 12a zu der landwirtschaftlichen Nutzfläche N und/oder deren Pflanzenbestand P umfasst;
204) Erzeugen eines Messwerts M mittels einer zweiten Sensoreinheit 12b, wobei der Messwert M Angaben zum Abstand der zweiten Sensoreinheit 12b zu der landwirtschaftlichen Nutzfläche N und/oder deren Pflanzenbestand P umfasst; und
206) Erzeugen eines Messwerts M mittels einer dritten Sensoreinheit 12c, wobei der Messwert M Angaben zum Abstand der dritten Sensoreinheit 12c zu der landwirtschaftlichen Nutzfläche N und/oder deren Pflanzenbestand P umfasst.

Die Sensoreinheiten 12a-12c sind beabstandet voneinander auf einer ersten Gestängeseite an dem Gestänge 102 des landwirtschaftlichen Spritzgeräts 100 angeordnet. Somit sind die Sensoreinheiten 12a-12c quer zur Fahrtrichtung des landwirtschaftlichen Spritzgeräts 100 angeordnet.

Das landwirtschaftliche Spritzgerät 100 verfügt über unabhängig voneinander neigbare Gestängeseiten. Mithin können im Rahmen des Verfahrens auch Messwerte M von Sensoreinheiten 14a-14c, welche auf einer zweiten Gestängeseite angeordnet sind, erzeugt werden. Diese Messwerte M betreffen dann Angaben zum Abstand der Sensoreinheiten 14a-14c der zweiten Gestängeseite zu der landwirtschaftlichen Nutzfläche N und/oder deren Pflanzenbestand P. Alternativ kann das landwirtschaftliche Spritzgerät über ein Gestänge 102 verfügen, dessen Seiten nicht unabhängig voneinander neigbar sind. In diesem Fall können die in dem Verfahren genutzten Sensoreinheiten 12a-12c, 14a-14c auf einer oder auf beiden Seiten des Gestänges 102 angeordnet sein.

Nachdem die Messwerte M durch die Sensoreinheiten 12a-12c der ersten Gestängeseite erzeugt wurden, kann der folgende Schritt ausgeführt werden:
208) Berechnen eines oder mehrerer Referenzwerte, welche von den Messwerten M der quer zur Fahrtrichtung des landwirtschaftlichen Spritzgeräts 100 angeordneten Sensoreinheiten 12a-12c der ersten Gestängeseite abhängig sind.

In analoger Weise kann auch ein oder können mehrere Referenzwerte berechnet werden, welche von den Messwerten M der quer zur Fahrtrichtung des landwirtschaftlichen Spritzgeräts 100 angeordneten Sensoreinheiten 14a-14c der zweiten Gestängeseite abhängig sind.

Sobald aus den Messwerten M der Sensoreinheiten 12a-12c ein oder mehrere Referenzwerte berechnet wurden, können die folgenden Schritte ausgeführt werden:
210) Bewerten des Messwerts M der ersten Sensoreinheit 12a der ersten Gestängeseite in Abhängigkeit der zeitgleich mit dem ersten Messwert M erfassten Messwerte M der anderen Sensoreinheiten 12b, 12c der ersten Gestängeseite;
212) Bewerten des Messwerts M der zweiten Sensoreinheit 12b der ersten Gestängeseite in Abhängigkeit der zeitgleich mit dem zweiten Messwert M erfassten Messwerte M der anderen Sensoreinheiten 12a, 12c der ersten Gestängeseite; und
214) Bewerten des Messwerts M der dritten Sensoreinheit 12c der ersten Gestängeseite in Abhängigkeit der zeitgleich mit dem dritten Messwert M erfassten Messwerte M der anderen Sensoreinheiten 12a, 12b der ersten Gestängeseite.

Das Bewerten der Messwerte M der Sensoreinheiten 12a-12c der ersten Gestängeseite erfolgt also in Abhängigkeit von zeitgleich mit dem jeweils zu bewertenden Messwert M erfassten Messwerten M anderer Sensoreinheiten 12a-12c der ersten Gestängeseite, wobei das Bewerten der Messwerte M der Sensoreinheiten 12a-12c dabei hinsichtlich der Signalplausibilität und der Signalverwertbarkeit zum Erfassen des Abstands A des Gestänges 102 des landwirtschaftlichen Spritzgeräts 100 zu der landwirtschaftlichen Nutzfläche N und/oder deren Pflanzenbestand P erfolgt.

Die Messwerte M der Sensoreinheiten 12a-12c der ersten Gestängeseite können auch in Abhängigkeit von zeitgleich erfassten Messwerten M der Sensoreinheiten 14a-14c der zweiten Gestängeseite bewertet werden. Ferner können die Messwerte M der Sensoreinheiten der 14a-14c der zweite Gestängeseite in Abhängigkeit der Messwerte M der Sensoreinheiten 12a-12c der ersten Gestängeseite und/oder in Abhängigkeit der Messwerte M der Sensoreinheiten 14a-14c der zweiten Gestängeseite bewertet werden.

Das Bewerten der Messwerte M der Sensoreinheiten 12a-12c der ersten Gestängeseite umfasst das Vergleichen des jeweils zu bewertenden Messwerts M mit den ermittelten Referenzwerten, welche von den Messwerten der quer zur Fahrtrichtung des landwirtschaftlichen Spritzgeräts 100 angeordneten Sensoreinheiten 12a-12c der ersten Gestängeseite abhängig sind, und das Erfassen einer Signalabweichung zwischen den zu bewertenden Messwerten M der Sensoreinheiten 12a-12c der ersten Gestängeseite und den Referenzwerten.

Das Bewerten der Messwerte M der Sensoreinheiten 14a-14c der zweiten Gestängeseite kann demnach das Vergleichen des jeweils zu bewertenden Messwerts M mit den ermittelten Referenzwerten, welche von den Messwerten der quer zur Fahrtrichtung des landwirtschaftlichen Spritzgeräts 100 angeordneten Sensoreinheiten 14a-14c der zweiten Gestängeseite abhängig sind, und das Erfassen einer Signalabweichung zwischen den zu bewertenden Messwerten M der Sensoreinheiten 14a-14c der zweiten Gestängeseite und den Referenzwerten umfassen.

Der oben beschriebene Bewertungsvorgang wiederholt sich ständig, sodass der folgende Schritt ausgeführt werden kann:
216) Erzeugen eines ersten Auswertsignals S auf Grundlage der Messwerte M der Sensoreinheiten 12a-12c der ersten Gestängeseite.

Beim Erzeugen des ersten Auswertsignals S können die folgenden Schritte einmalig oder mehrfach ausgeführt werden:
218) Verwerfen eines bewerteten Messwerts M der ersten Sensoreinheit 12a der ersten Gestängeseite in Abhängigkeit der Messwertbewertung,
220) Gewichten eines bewerteten Messwerts M der ersten Sensoreinheit 12a der ersten Gestängeseite in Abhängigkeit der Messwertbewertung in Relation zu anderen Messwerten M, und
222) Ersetzen eines bewerteten Messwerts M der ersten Sensoreinheit 12a der ersten Gestängeseite in Abhängigkeit der Messwertbewertung durch einen Ersatzwert, wobei der Ersatzwert ein zuvor erfasster und zwischengespeicherter Messwert M ist.

Ferner kann analog der folgende Schritt ausgeführt werden:
224) Erzeugen eines zweiten Auswertsignals S auf Grundlage der Messwerte M der Sensoreinheiten 12a-12c der ersten Gestängeseite.

Beim Erzeugen des zweiten Auswertsignals S können die folgenden Schritte einmalig oder mehrfach ausgeführt werden:
226) Verwerfen eines bewerteten Messwerts M der zweiten Sensoreinheit 12b der ersten Gestängeseite in Abhängigkeit der Messwertbewertung,
228) Gewichten eines bewerteten Messwerts M der zweiten Sensoreinheit 12b der ersten Gestängeseite in Abhängigkeit der Messwertbewertung in Relation zu anderen Messwerten M, und
230) Ersetzen eines bewerteten Messwerts M der zweiten Sensoreinheit 12b der ersten Gestängeseite in Abhängigkeit der Messwertbewertung durch einen Ersatzwert, wobei der Ersatzwert ein zuvor erfasster und zwischengespeicherter Messwert M ist.

Ferner kann analog der folgende Schritt ausgeführt werden kann:
232) Erzeugen eines dritten Auswertsignals S auf Grundlage der Messwerte M der Sensoreinheiten 12a-12c der ersten Gestängeseite.

Beim Erzeugen des dritten Auswertsignals S können die folgenden Schritte einmalig oder mehrfach ausgeführt werden:
234) Verwerfen eines bewerteten Messwerts M der dritten Sensoreinheit 12c der ersten Gestängeseite in Abhängigkeit der Messwertbewertung,
236) Gewichten eines bewerteten Messwerts M der dritten Sensoreinheit 12c der ersten Gestängeseite in Abhängigkeit der Messwertbewertung in Relation zu anderen Messwerten M, und
238) Ersetzen eines bewerteten Messwerts M der dritten Sensoreinheit 12c der ersten Gestängeseite in Abhängigkeit der Messwertbewertung durch einen Ersatzwert, wobei der Ersatzwert ein zuvor erfasster und zwischengespeicherter Messwerte M ist.

Das Erzeugen der Auswertsignale S kann auch auf Grundlage der Messwerte M der Sensoreinheiten 14a-14c der zweiten Gestängeseite erfolgen.

Das Verwerfen, Gewichten und Ersetzen von Messwerten M erfolgt, wenn die Abweichung zwischen dem Messwert M einer Sensoreinheit 12a-12c und dem jeweiligen Referenzwert eine Abweichungsschwelle überschreitet. Auf Grundlage der Auswertsignale S kann das Erfassen des Abstands A des Gestänges 102 des landwirtschaftlichen Spritzgeräts 100 zu der landwirtschaftlichen Nutzfläche N und/oder deren Pflanzenbestand P mit dem folgenden Schritt abgeschlossen werden:
240) Auswerten der Auswertsignale S zum Erzeugen eines Steuersignals für einen oder mehrere Aktoren einer Einrichtung zur Führung des Gestänges 102 des landwirtschaftlichen Spritzgeräts 100.

Nachdem ein Steuersignal für den einen oder die mehreren Aktoren der Einrichtung zur Führung des Gestänges 102 des landwirtschaftlichen Spritzgeräts 100 erzeugt wurde, kann das Verfahren zum Führen des Gestänges 102 des landwirtschaftlichen Spritzgeräts 100 mit dem folgenden Schritt abgeschlossen werden:
242) Steuern des einen oder der mehreren Aktoren der Einrichtung zur Führung des Gestänges 102 des landwirtschaftlichen Spritzgeräts 100 in Abhängigkeit des erfassten Abstands A des Gestänges 102 zu der landwirtschaftlichen Nutzfläche N und/oder deren Pflanzenbestand P.

Die in dem in Fig. 3 dargestellten Verfahren erzeugten Messwerte der Sensoreinheiten 12a-12c können vor oder nach dem Bewerten in Abhängigkeit von zeitgleich erfassten Messwerten M anderer Sensoreinheiten 12a-12c auch in Abhängigkeit von zeitlich vorher erfassten Messwerten M der jeweils gleichen Sensoreinheit 12a-12c bewertet werden.

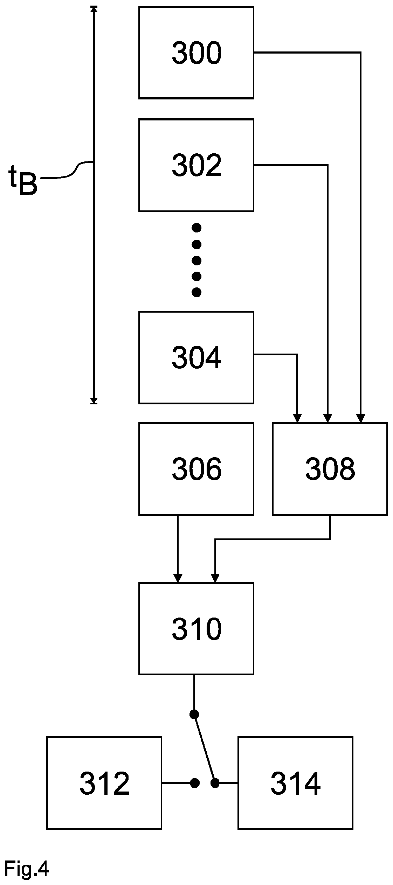

Fig. 4 zeigt beispielhaft, wie ein Messwert M unmittelbar nach seiner Erzeugung durch die Sensoreinheit 12a in Abhängigkeit von zeitlich vordem zu bewertenden Messwert M erfassten Messwerten M der gleichen Sensoreinheit 12a bewertet wird. Zunächst werden mit den folgenden Schritten mehrere Messwerte erzeugt:
300) Erzeugen eines Messwerts M mittels der ersten Sensoreinheit 12a zu einem ersten Zeitpunkt, wobei der Messwert M Angaben zum Abstand der ersten Sensoreinheit 12a zu der landwirtschaftlichen Nutzfläche N und/oder deren Pflanzenbestand P umfasst;
302) Erzeugen eines Messwerts M mittels der ersten Sensoreinheit 12a zu einem zweiten Zeitpunkt, wobei der Messwert M Angaben zum Abstand der ersten Sensoreinheit 12a zu der landwirtschaftlichen Nutzfläche N und/oder deren Pflanzenbestand P umfasst;
304) Erzeugen eines Messwerts M mittels der ersten Sensoreinheit 12a zu einem dritten Zeitpunkt, wobei der Messwert M Angaben zum Abstand der ersten Sensoreinheit 12a zu der landwirtschaftlichen Nutzfläche N und/oder deren Pflanzenbestand P umfasst.

Der jeweiligen Zeitpunkte der Messwerterzeugung liegen innerhalb eines Bewertungszeitraums t_{B}, wobei die Punktierung zeigen soll, dass in dem Bewertungszeitraum t_{B} auch eine größere Anzahl von Messwerten M durch die Sensoreinheit 12a erzeugt werden kann. Der Bewertungszeitraum t_{B} liegt vor dem Ausführungszeitpunkt des folgenden Schritts:
306) Erzeugen eines Messwerts M mittels der ersten Sensoreinheit 12a zu einem vierten Zeitpunkt, wobei der Messwert M Angaben zum Abstand der ersten Sensoreinheit 12a zu der landwirtschaftlichen Nutzfläche N und/oder deren Pflanzenbestand P umfasst.

Der im Schritt 306 erzeugte Messwert M soll nun in Abhängigkeit der zuvor in den Schritten 300 bis 304 erzeugten Messwerte M bewertet werden. Hierzu werden die in den Schritten 300 bis 304 erzeugten Messwerte in dem folgenden Schritt verwendet:
308) Berechnen eines Referenzwerts, welcher von den innerhalb des Bewertungszeitraums t_{B} erzeugten Messwerten M der Sensoreinheit 12a abhängig ist.

Sobald der Referenzwert berechnet wurde, kann der folgende Schritt ausgeführt werden:
310) Bewerten des Messwerts M der ersten Sensoreinheit 12a in Abhängigkeit der zeitlich vor dem zu bewertenden Messwert M erfassten Messwerte der Sensoreinheit 12a.

Das Bewerten des Messwerts M der Sensoreinheit 12a umfasst dabei das Vergleichen des zu bewertenden Messwerts M mit dem ermittelten Referenzwert, welcher von den zuvor erfassten Messwerten M der Sensoreinheit 12a abhängig ist. Abhängig von der Messwertbewertung wird nachfolgend einer der folgenden Schritte ausgeführt:
312) Verwenden des bewerteten Messwerts M in dem weiteren Verfahren ohne Veränderung; oder
314) Verändern des bewerteten Messwerts M vor der Verwendung in dem weiteren Verfahren.

Das Verändern des bewerteten Messwerts M kann dabei das Modifizieren des bewerteten Messwerts M in Abhängigkeit der Messwertbewertung oder das Gewichten des bewerteten Messwerts M in Abhängigkeit der Messwertbewertung in Relation zu zumindest einem Messwert der gleichen Sensoreinheit 12a umfassen. Alternativ kann der bewertete Messwert M auch verworfen werden.

Der oben beschriebene Bewertungsvorgang wiederholt sich ständig. Diese Bewertungsroutine berücksichtigt dabei zunächst keine Umgebungsinformationen, welche von anderen Sensoreinheiten bereitgestellt werden.

Jedoch können die in der Fig. 3 und der Fig. 4 dargestellten Abläufe, wie oben bereits dargelegt, miteinander kombiniert werden. Dies bedeutet, dass eine Mehrfachbewertung der Messwerte umgesetzt werden kann. Dabei werden die Messwerte M der Sensoreinheiten 12a-12c zunächst in Abhängigkeit von zeitlich vor dem zu bewertenden Messwert M erfassten anderen Messwerten der gleichen Sensoreinheit 12a-12c bewertet und nachfolgend verändert oder unverändert übernommen. Im Anschluss können die verändert oder unverändert übernommenen Messwerte M dann in Abhängigkeit der Messwerte anderer Sensoreinheiten 12a-12c, 14a-14c der gleichen und/oder der anderen Gestängeseite bewertet werden.

### Bezugszeichenliste

- 10: Steuerungssystem
- 12a-12c: Sensoreinheiten
- 14a-14c: Sensoreinheiten
- 16: Datenverarbeitungseinrichtung

- 100: Spritzgerät
- 102: Gestänge
- 104a-104d: Gestängesegmente
- 106a-106d: Gestängesegmente

- 200-242: Verfahrensschritte
- 300-314: Verfahrensschritte

- N: Nutzfläche
- P: Pflanzenbestand
- t: Zeit
- t_{B}: Bewertungszeitraum
- A: Abstand
- M: Messwerte
- S: Auswertsignal

## Patentansprüche

1. Verfahren zum Erfassen des Abstands (A) eines Gestänges (102) eines landwirtschaftlichen Spritzgeräts (100), insbesondere einer Feldspritze, zu einer landwirtschaftlichen Nutzfläche (N) und/oder deren Pflanzenbestand (P), mit dem Schritt:
- Erzeugen von Messwerten (M) mittels mehrerer Sensoreinheiten (12a-12c, 14a-14c), wobei die Sensoreinheiten (12a-12c, 14a-14c) beabstandet voneinander an einem Gestänge (102) des landwirtschaftlichen Spritzgeräts (100) angeordnet sind und die Messwerte (M) Umgebungsinformationen der jeweiligen Sensoreinheiten (12a-12c, 14a-14c) umfassen; wobei die Umgebungsinformationen in den Messwerten (M) der Sensoreinheiten (12a-12c, 14a-14c) Informationen über den Abstand (A) der jeweiligen Sensoreinheiten (12a-12c, 14a-14c) zu der landwirtschaftlichen Nutzfläche (N) und/oder deren Pflanzenbestand (P) umfassen,
**gekennzeichnet durch** den Schritt:
- Bewerten zumindest eines Messwerts (M) von zumindest einer Sensoreinheit (12a-12c, 14a-14c) in Abhängigkeit zumindest eines Messwerts (M) von der gleichen und/oder zumindest einer anderen Sensoreinheit (12a-12c, 14a-14c), wobei
durch das Bewerten zumindest eines Messwerts zumindest einer Sensoreinheit ein Qualifizieren des zumindest einen bewerteten Messwerts hinsichtlich der Verwertbarkeit des zumindest einen Messwerts in Steuerungs- und/oder Regelungsroutinen des landwirtschaftlichen Spritzgeräts erfolgt.

2. Verfahren nach Anspruch 1,
**dadurch gekennzeichnet, dass** das Bewerten zumindest eines Messwerts (M) zumindest einer Sensoreinheit (12a-12c, 14a-14c) in Abhängigkeit zumindest eines Messwerts (M) der gleichen und/oder zumindest einer anderen Sensoreinheit (12a-12c, 14a-14c) hinsichtlich der Signalplausibilität und/oder der Signalverwertbarkeit zum Erfassen des Abstands (A) des Gestänges (102) des landwirtschaftlichen Spritzgeräts (100) zu der landwirtschaftlichen Nutzfläche (N) und/oder deren Pflanzenbestand (P) erfolgt.

3. Verfahren nach Anspruch 1 oder 2,
**dadurch gekennzeichnet, dass** das Bewerten zumindest eines Messwerts (M) zumindest einer Sensoreinheit (12a-12c, 14a-14c) in Abhängigkeit zumindest eines zeitgleich mit dem zu bewertenden Messwert (M) erfassten Messwerts (M) zumindest einer anderen Sensoreinheit (12a-12c, 14a-14c) erfolgt.

4. Verfahren nach einem der vorstehenden Ansprüche,
**dadurch gekennzeichnet, dass** das Bewerten zumindest eines Messwerts (M) zumindest einer Sensoreinheit (12a-12c, 14a-14c) in Abhängigkeit zumindest eines zeitlich vor dem zu bewertenden Messwert (M) erfassten Messwerts (M) dergleichen Sensoreinheit (12a-12c, 14a-14c) erfolgt.

5. Verfahren nach einem der vorstehenden Ansprüche,
**dadurch gekennzeichnet, dass** das Bewerten zumindest eines Messwerts (M) zumindest einer Sensoreinheit (12a-12c, 14a-14c) in Abhängigkeit zumindest eines Messwerts (M) der gleichen und/oder zumindest einer anderen Sensoreinheit (12a-12c, 14a-14c) zumindest einen der folgenden Schritte umfasst:
- Vergleichen des zumindest einen zu bewertenden Messwerts (M) der zumindest einen Sensoreinheit (12a-12c, 14a-14c) mit einem Referenzwert, welcher von dem zumindest einen Messwert (M) der gleichen und/oder der zumindest einen anderen Sensoreinheit (12a-12c, 14a-14c) abhängig ist;
- Erfassen der Signalabweichung zwischen dem zumindest einen zu bewertenden Messwert (M) der zumindest einen Sensoreinheit (12a-12c, 14a-14c) und dem Referenzwert, welcher von dem zumindest einen Messwert (M) der gleichen und/oder der zumindest einen anderen Sensoreinheit (12a-12c, 14a-14c) abhängig ist;
- Vergleichen des zumindest einen zu bewertenden Messwerts (M) der zumindest einen Sensoreinheit (12a-12c, 14a-14c) mit dem zumindest einen Messwert (M) der gleichen und/oder der zumindest einen anderen Sensoreinheit (12a-12c, 14a-14c);
- Erfassen der Signalabweichung zwischen dem zumindest einen zu bewertenden Messwert (M) der zumindest einen Sensoreinheit (12a-12c, 14a-14c) und dem zumindest einen Messwert (M) der gleichen und/oder der zumindest einen anderen Sensoreinheit (12a-12c, 14a-14c).

6. Verfahren nach einem der vorstehenden Ansprüche,
**gekennzeichnet durch** zumindest einen der folgenden Schritte:
- Verwerfen eines bewerteten Messwerts (M) einer Sensoreinheit (12a-12c, 14a-14c) in Abhängigkeit der Messwertbewertung;
- Modifizieren eines Messwerts (M) einer Sensoreinheit (12a-12c, 14a-14c) in Abhängigkeit der Messwertbewertung;
- Gewichten eines Messwerts (M) einer Sensoreinheit (12a-12c, 14a-14c) in Abhängigkeit der Messwertbewertung in Relation zu zumindest einem Messwert (M) der gleichen und/oder zumindest einer anderen Sensoreinheit (12a-12c, 14a-14c).

7. Verfahren nach einem der vorstehenden Ansprüche,
**gekennzeichnet durch** den Schritt:
- Ersetzen eines bewerteten Messwerts (M) einer Sensoreinheit (12a-12c, 14a-14c) in Abhängigkeit der Messwertbewertung durch einen Ersatzwert,
wobei der Ersatzwert vorzugsweise von zumindest einem Messwert (M) der gleichen und/oder zumindest einer anderen Sensoreinheit (12a-12c, 14a-14c) abhängig ist und/oder ein zuvor erfasster und zwischengespeicherter Messwert (M) ist.

8. Verfahren nach einem der vorstehenden Ansprüche,
**dadurch gekennzeichnet, dass** die Umgebungsinformationen in den Messwerten (M) der Sensoreinheiten (12a-12c, 14a-14c) Informationen zu den Reflexionseigenschaften der landwirtschaftlichen Nutzfläche (N) und/oder deren Pflanzenbestand (P) umfassen.

9. Verfahren nach einem der vorstehenden Ansprüche,
**gekennzeichnet durch** zumindest einen der folgenden Schritte:
- Erzeugen von einem oder mehreren Auswertsignalen (S) auf Grundlage der mehreren Messwerte (M) der Sensoreinheiten (12a-12c, 14a-14c), wobei das Erzeugen des einen oder der mehreren Auswertsignale (S) das Verwerfen, Modifizieren, Gewichten und/oder Ersetzen von einem oder mehreren bewerteten Messwerten (M) umfasst;
- Auswerten des einen oder der mehreren Auswertsignale (S) zum Erzeugen eines Steuersignals für einen oder mehrere Aktoren einer Einrichtung zur Führung des Gestänges (102) des landwirtschaftlichen Spritzgeräts (100).

10. Verfahren zum Führen eines Gestänges (102) eines landwirtschaftlichen Spritzgeräts (100), insbesondere einer Feldspritze, mit den Schritten:
- Erfassen des Abstands (A) des Gestänges (102) des landwirtschaftlichen Spritzgeräts (100) zu einer landwirtschaftlichen Nutzfläche (N) und/oder deren Pflanzenbestand (P);
- Steuern von einem oder mehreren Aktoren einer Einrichtung zur Führung des Gestänges (102) des landwirtschaftlichen Spritzgeräts (100) in Abhängigkeit des erfassten Abstands (A) des Gestänges (102) zu der landwirtschaftlichen Nutzfläche (N) und/oder deren Pflanzenbestand (P);
**dadurch gekennzeichnet, dass** das Erfassen des Abstands (A) des Gestänges (102) zu der landwirtschaftlichen Nutzfläche (N) und/oder deren Pflanzenbestand (P) mittels des Verfahrens zum Erfassen des Abstands (A) eines Gestänges (102) eines landwirtschaftlichen Spritzgeräts (100) zu einer landwirtschaftlichen Nutzfläche (N) und/oder deren Pflanzenbestand (P) nach einem der vorstehenden Ansprüche erfolgt.

## Claims

1. Method for detecting the distance (A) of a boom (102) of an agricultural sprayer (100) - in particular, a field sprayer - to an agricultural area (S) and/or its plant stock (P), comprising the step of:
- generating measured values (M) by means of several sensor units (12a-12c, 14a-14c), wherein the sensor units (12a-12c, 14a-14c) are arranged at a distance from one another on a boom (102) of the agricultural sprayer (100), and the measured values (M) comprise environmental information of the respective sensor units (12a-12c, 14a-14c); wherein
the environmental information in the measured values (M) of the sensor units (12a-12c, 14a-14c) comprises information about the distance (A) of the respective sensor units (12a-12c, 14a-14c) to the agricultural area (S) and/or its plant stock (P),
**characterized by** the step of:
- evaluating at least one measured value (M) of at least one sensor unit (12a-12c, 14a-14c) as a function of at least one measured value (M) of the same and/or at least one other sensor unit (12a-12c, 14a-14c), wherein,
by evaluating at least one measured value of at least one sensor unit, the at least one evaluated measured value is qualified with regard to the usability of the at least one measured value in control and/or regulation routines of the agricultural sprayer.

2. Method according to claim 1,
**characterized in that** at least one measured value (M) of at least one sensor unit (12a-12c, 14a-14c) is evaluated as a function of at least one measured value (M) of the same and/or at least one other sensor unit (12a-12c, 14a-14c) with regard to signal plausibility and/or signal usability for detecting the distance (A) of the boom (102) of the agricultural sprayer (100) to the agricultural area (S) and/or its plant stock (P).

3. Method according to claim 1 or 2,
**characterized in that** at least one measured value (M) of at least one sensor unit (12a-12c, 14a-14c) is evaluated as a function of at least one measured value (M) of at least one other sensor unit (12a-12c, 14a-14c) detected simultaneously with the measured value (M) to be evaluated.

4. Method according to one of the preceding claims,
**characterized in that** the at least one measured value (M) of at least one sensor unit (12a-12c, 14a-14c) is evaluated as a function of at least one measured value (M) of the same sensor unit (12a-12c, 14a-14c) detected temporally before the measured value (M) to be evaluated.

5. Method according to one of the preceding claims,
**characterized in that** the evaluation of at least one measured value (M) of at least one sensor unit (12a-12c, 14a-14c) as a function of at least one measured value (M) of the same and/or at least one other sensor unit (12a-12c, 14a-14c) comprises at least one of the following steps:
- comparing the at least one measured value (M) to be evaluated of the at least one sensor unit (12a-12c, 14a-14c) to a reference value, which is a function of the at least one measured value (M) of the same and/or the at least one other sensor unit (12a-12c, 14a-14c);
- detecting the signal deviation between the at least one measured value (M) to be evaluated of the at least one sensor unit (12a-12c, 14a-14c) and the reference value, which is a function of the at least one measured value (M) of the same and/or the at least one other sensor unit (12a-12c, 14a-14c);
- comparing the at least one measured value (M) to be evaluated of the at least one sensor unit (12a-12c, 14a-14c) to the at least one measured value (M) of the same and/or the at least one other sensor unit (12a-12c, 14a-14c);
- detecting the signal deviation between the at least one measured value (M) to be evaluated of the at least one sensor unit (12a-12c, 14a-14c) and the at least one measured value (M) of the same and/or the at least one other sensor unit (12a-12c, 14a-14c).

6. Method according to one of the preceding claims,
**characterized by** at least one of the following steps:
- discarding an evaluated measured value (M) of a sensor unit (12a-12c, 14a-14c) as a function of the measured value evaluation;
- modifying a measured value (M) of a sensor unit (12a-12c, 14a-14c) as a function of the measured value evaluation;
- weighting a measured value (M) of a sensor unit (12a-12c, 14a-14c) as a function of the measured value evaluation in relation to at least one measured value (M) of the same and/or at least one other sensor unit (12a-12c, 14a-14c).

7. Method according to one of the preceding claims,
**characterized by** the step of:
- replacing an evaluated measured value (M) of a sensor unit (12a-12c, 14a-14c) with a replacement value as a function of the measured value evaluation,
wherein the replacement value preferably is a function of at least one measured value (M) of the same and/or at least one other sensor unit (12a-12c, 14a-14c) and/or is a previously detected and temporarily stored measured value (M).

8. Method according to one of the preceding claims,
**characterized in that** the environmental information in the measured values (M) of the sensor units (12a-12c, 14a-14c) comprises information regarding the reflection properties of the agricultural area (S) and/or its plant stock (P).

9. Method according to one of the preceding claims,
**characterized by** at least one of the following steps:
- generating one or more evaluation signals (S) on the basis of the several measured values (M) of the sensor units (12a-12c, 14a-14c), wherein generating the one or more evaluation signals (S) comprises discarding, modifying, weighting, and/or replacing one or more evaluated measured values (M);
- evaluating the one or more evaluation signals (S) to generate a control signal for one or more actuators of a device for guiding the boom (102) of the agricultural sprayer (100).

10. Method for guiding a boom (102) of an agricultural sprayer (100) - in particular, a field sprayer - comprising the steps of:
- detecting the distance (A) of the boom (102) of the agricultural sprayer (100) to an agricultural area (S) and/or its plant stock (P);
- controlling one or more actuators of a device for guiding the boom (102) of the agricultural sprayer (100) as a function of the detected distance (A) of the boom (102) to the agricultural area (S) and/or its plant stock (P);
**characterized in that** the distance (A) of the boom (102) to the agricultural area (S) and/or its plant stock (P) is detected by means of the method for detecting the distance (A) of a boom (102) of an agricultural sprayer (100) to an agricultural area (S) and/or its plant stock (P) according to one of the preceding claims.

## Revendications

1. Procédé de détection de la distance (A) d'une tige (102) d'un appareil de pulvérisation agricole (100), en particulier un pulvérisateur agricole, par rapport à une surface agricole (N) et/ou à sa végétation (P), comprenant l'étape :
- de production de valeurs de mesure (M) au moyen de plusieurs unités de capteur (12a-12c, 14a-14c), dans lequel les unités de capteur (12a-12c, 14a-14c) sont agencées espacées les unes des autres sur une tige (102) de l'appareil de pulvérisation agricole (100) et les valeurs de mesure (M) comprennent des informations environnementales des unités de capteur (12a-12c, 14a-14c) respectives ; dans lequel
les informations environnementales dans les valeurs de mesure (M) des unités de capteur (12a-12c, 14a-14c) comprennent des informations sur la distance (A) des unités de capteur (12a-12c, 14a-14c) respectives par rapport à la surface agricole (N) et/ou sa végétation (P),
**caractérisé par** l'étape :
- d'évaluation d'au moins une valeur de mesure (M) d'au moins une unité de capteur (12a-12c, 14a-14c) en fonction d'au moins une valeur de mesure (M) de la même et/ou d'au moins une autre unité de capteur (12a-12c, 14a-14c), dans lequel
par l'évaluation d'au moins une valeur de mesure d'au moins une unité de capteur, une qualification de l'au moins une valeur de mesure évaluée est effectuée par rapport à la validité de l'au moins une valeur de mesure dans des routines de commande et/ou de régulation de l'appareil de pulvérisation agricole.

2. Procédé selon la revendication 1,
**caractérisé en ce que** l'évaluation d'au moins une valeur de mesure (M) d'au moins une unité de capteur (12a-12c, 14a-14c) est effectuée en fonction d'au moins une valeur de mesure (M) de la même et/ou d'au moins une autre unité de capteur (12a-12c, 14a-14c) par rapport à la plausibilité de signal et/ou la validité de signal pour la détection de la distance (A) de la tige (102) de l'appareil de pulvérisation agricole (100) par rapport à la surface agricole (N) et/ou sa végétation (P).

3. Procédé selon la revendication 1 ou 2,
**caractérisé en ce que** l'évaluation d'au moins une valeur de mesure (M) d'au moins une unité de capteur (12a-12c, 14a-14c) est effectuée en fonction d'au moins une valeur de mesure (M) d'au moins une autre unité de capteur (12a-12c, 14a-14c) mesurée en même temps que la valeur de mesure (M) à évaluer.

4. Procédé selon l'une quelconque des revendications précédentes,
**caractérisé en ce que** l'évaluation d'au moins une valeur de mesure (M) d'au moins une unité de capteur (12a-12c, 14a-14c) est effectuée en fonction d'au moins une valeur de mesure (M) de la même unité de capteur (12a-12c, 14a-14c) détectée temporellement avant la valeur de mesure (M) à évaluer.

5. Procédé selon l'une quelconque des revendications précédentes,
**caractérisé en ce que** l'évaluation d'au moins une valeur de mesure (M) d'au moins une unité de capteur (12a-12c, 14a-14c) en fonction d'au moins une valeur de mesure (M) de la même et/ou d'au moins une autre unité de capteur (12a-12c, 14a-14c) comprend au moins une des étapes suivantes :
- comparaison de l'au moins une valeur de mesure (M) à évaluer de l'au moins une unité de capteur (12a-12c, 14a-14c) à une valeur de référence, qui dépend de l'au moins une valeur de mesure (M) de la même et/ou de l'au moins une autre unité de capteur (12a-12c, 14a-14c) ;
- détection de l'écart de signal entre l'au moins une valeur de mesure (M) à évaluer de l'au moins une unité de capteur (12a-12c, 14a-14c) et la valeur de référence, qui dépend de l'au moins une valeur de mesure (M) de la même et/ou de l'au moins une autre unité de capteur (12a-12c, 14a-14c) ;
- comparaison de l'au moins une valeur de mesure (M) à évaluer de l'au moins une unité de capteur (12a-12c, 14a-14c) à l'au moins une valeur de mesure (M) de la même et/ou de l'au moins une autre unité de capteur (12a-12c, 14a-14c) ;
- détection de l'écart de signal entre l'au moins une valeur de mesure (M) à évaluer de l'au moins une unité de capteur (12a-12c, 14a-14c) et l'au moins une valeur de mesure (M) de la même et/ou de l'au moins une autre unité de capteur (12a-12c, 14a-14c).

6. Procédé selon l'une quelconque des revendications précédentes,
**caractérisé par** au moins une des étapes suivantes :
- rejet d'une valeur de mesure (M) évaluée d'une unité de capteur (12a-12c, 14a-14c) en fonction de l'évaluation de valeur de mesure ;
- modification d'une valeur de mesure (M) d'une unité de capteur (12a-12c, 14a-14c) en fonction de l'évaluation de valeur de mesure ;
- pondération d'une valeur de mesure (M) d'au moins une unité de capteur (12a-12c, 14a-14c) en fonction de l'évaluation de valeur de mesure en relation avec au moins une valeur de mesure (M) de la même et/ou d'au moins une autre unité de capteur (12a-12c, 14a-14c).

7. Procédé selon l'une quelconque des revendications précédentes,
**caractérisé par** l'étape :
- de remplacement d'une valeur de mesure (M) évaluée d'une unité de capteur (12a-12c, 14a-14c) en fonction de l'évaluation de valeur de mesure par une valeur de remplacement,
dans lequel la valeur de remplacement dépend de préférence d'au moins une valeur de mesure (M) de la même et/ou d'au moins une autre unité de capteur (12a-12c, 14a-14c) et/ou est une valeur de mesure (M) détectée auparavant et mémorisée entre temps.

8. Procédé selon l'une quelconque des revendications précédentes,
**caractérisé en ce que** les informations environnementales dans les valeurs de mesure (M) des unités de capteur (12a-12c, 14a-14c) comprennent des informations sur les propriétés de réflexion de la surface agricole (N) et/ou de sa végétation (P).

9. Procédé selon l'une quelconque des revendications précédentes,
**caractérisé par** au moins une des étapes suivantes :
- production d'un ou plusieurs signaux d'évaluation (S) sur la base des plusieurs valeurs de mesure (M) des unités de capteur (12a-12c, 14a-14c), dans lequel la production de l'un ou des signaux d'évaluation (S) comprend le rejet, la modification, la pondération et/ou le remplacement d'une ou plusieurs valeurs de mesure (M) évaluées ;
- évaluation de l'un ou des signaux d'évaluation (S) pour la production d'un signal de commande pour un ou plusieurs actionneurs d'un dispositif de guidage de la tige (102) de l'appareil de pulvérisation agricole (100).

10. Procédé de guidage d'une tige (102) d'un appareil de pulvérisation agricole (100), en particulier un pulvérisateur agricole, comprenant les étapes :
- de détection de la distance (A) de la tige (102) de l'appareil de pulvérisation agricole (100) par rapport à une surface agricole (N) et/ou à sa végétation (P) ;
- de commande d'un ou plusieurs actionneurs d'un dispositif de guidage de la tige (102) de l'appareil de pulvérisation agricole (100) en fonction de la distance détectée (A) de la tige (102) par rapport à la surface agricole (N) et/ou sa végétation (P) ;
**caractérisé en ce que** la détection de la distance (A) de la tige (102) à la surface agricole (N) et/ou sa végétation (P) s'effectue au moyen du procédé de détection de la distance (A) d'une tige (102) d'un appareil de pulvérisation agricole (100) à une surface agricole (N) et/ou sa végétation (P) selon l'une quelconque des revendications précédentes.
